# EUROPÄISCHE PATENTSCHRIFT

(11) **EP 2 753 500 B1**
(45) Veröffentlichungstag und Bekanntmachung des Hinweises auf die Patenterteilung: **02.01.2019**
(21) Anmeldenummer: 12754007.8
(22) Anmeldetag: 05.09.2012
(51) Int. Cl.: B60P 1/64, B60P 3/32

(54) **FAHRZEUG MIT AUFLIEGER IN MODULARER BAUWEISE**
VEHICLE HAVING A SEMI-TRAILER IN A MODULAR DESIGN
VÉHICULE À SEMI-REMORQUE DE CONCEPTION MODULAIRE

(30) Priorität: 06.09.2011 DE 102011053306
(43) Veröffentlichungstag der Anmeldung: 16.07.2014
(73) Patentinhaber: Drehtainer GmbH Spezial Container- und Fahrzeugbau, 19246 Valluhn (DE)
(72) Erfinder: MEYER, Helmut, 25469 Halstenbek (DE)
(74) Vertreter: Stork Bamberger Patentanwälte PartmbB
(86) Internationale Anmeldenummer: PCT/EP2012/067326
(87) Internationale Veröffentlichungsnummer: WO 2013/034596

(56) Entgegenhaltungen:
- WO-A1-2008/124236
- DE-A1- 4 444 330
- DE-U1- 20 005 214
- DE-U1-202010 016 249
- FR-A3- 2 467 268

## Beschreibung

Die vorliegende Erfindung betrifft ein Fahrzeug in modularer Bauweise umfassend ein Chassis und einen vollständig vom Chassis lösbaren Auflieger, wobei das Fahrzeug eine Positionierungseinrichtung aufweist, die zum Verändern der Position des Aufliegers relativ zum Chassis ausgebildet und eingerichtet ist. Des Weiteren betrifft die Erfindung ein Verfahren zur Kopplung mehrerer Auflieger eines Fahrzeugs in modularer Bauweise.

Derartige Fahrzeuge und Verfahren kommen insbesondere beim Errichten von mobilen Gebäuden zum Einsatz. Dazu werden zunächst die Fahrzeuge in räumliche Nähe zueinander gebracht und anschließend die Auflieger mittels der Positionierungseinrichtung bezüglich ihrer Höhe nivelliert. Die Auflieger der Fahrzeuge werden im Anschluss in unmittelbaren Kontakt miteinander gebracht, so dass die miteinander verbundenen Auflieger ein mobiles Gebäude, beispielsweise eine Krankenstation, eine Kommandozentrale oder dergleichen, bilden. Um die Auflieger zu einem Gesamtgebäude verbinden zu können, verfügen die Auflieger in der Regel über herausnehmbare Seitenteile, die im gekoppelten Zustand der Auflieger eine Verbindung der einzelnen Auflieger untereinander ermöglichen.

Das Dokument DE 20 2010 016 249 U1 aus dem Hause der Anmelderin zeigt ein Fahrzeug mit einer Chassishubeinrichtung mittels derer das gesamte Fahrzeug einschließlich des Aufliegers vertikal ausgerichtet und damit in der Höhe nivelliert werden kann. Aus dem genannten Dokument geht ferner hervor, die Auflieger wahlweise mittels Containerstelzen auf dem Untergrund abzustützen.

Nachteilig ist, dass entweder die Chassis der Fahrzeuge unter den Aufliegern verleiben müssen oder zunächst Chassis und Auflieger mittels der Chassishubeinrichtung angehoben werden müssen, um anschließend die Auflieger manuell mit Containerstelzen zu versehen und damit die Auflieger auf dem Untergrund abzustützen. Nach dem Anbringen der Containerstelzen muss der Auflieger soweit abgesenkt werden, dass die Containerstelzen die Last aufnehmen. Erst danach können die Fahrzeuge unter den Containern herausgefahren werden. Das Verbinden der Auflieger ist aufgrund der erforderlichen Hub- und Senkbewegung der Auflieger sowie der umfangsreichen manuellen Tätigkeiten im Zusammenhang mit dem Anbringen der Containerstützen sehr zeitaufwändig, und der Zusammenbau der Auflieger ist mit einer Vielzahl manueller Tätigkeiten, insbesondere zum Anbringen der Containerstützen, verbunden.

Ein weiterer Nachteil besteht darin, dass die miteinander verbundenen Auflieger aufgrund der verwendeten Containerstützen nicht oder nur mit erheblichem Aufwand an Unebenheiten des Untergrunds angepasst werden können. Sollen die Auflieger auf einem unebenen Gelände aufgestellt werden, müssen Containerstützen unterschiedlicher Länge verwendet werden. Auf der einen Seite hat dies umfangreiche Anpassarbeiten beim Aufständern der Auflieger zur Folge, auf der anderen Seite ist es erforderlich, eine Vielzahl an Containerstützen verschiedener Längen vorrätig zu halten.

Es ist daher Aufgabe der vorliegenden Erfindung, ein Fahrzeug zur Verfügung zu stellen, dass eine effektive Kopplung der Auflieger der Fahrzeuge in möglichst kurzer Zeit gewährleistet. Des Weiteren besteht die Aufgabe darin, ein entsprechendes Verfahren zur Kopplung mehrerer Auflieger eines solchen Fahrzeugs vorzusehen.

Die Aufgabe wird durch eine Anordnung mit den eingangs genannten Merkmalen dadurch gelöst, dass der Auflieger eine Verbindungseinrichtung umfasst, die zum Verbinden des Aufliegers mit mindestens einem weiteren Auflieger ausgebildet und eingerichtet ist und in dem Auflieger innenseitig eine Hubeinrichtung angeordnet ist, die zum Abstützen des Aufliegers und/oder Verändern der Position des Aufliegers relativ zum Untergrund ausgebildet und eingerichtet ist. Anders ausgedrückt umfasst der Auflieger eine Hubeinrichtung, die im Inneren des Aufliegers angeordnet ist. Mittels der Hubeinrichtung ist es möglich, den Auflieger gegenüber dem Untergrund abzustützen, ohne zusätzliche Stützen oder dergleichen manuell am Auflieger anbringen zu müssen. Ein weiterer Vorteil besteht darin, dass der Auflieger mittels der Hubeinrichtung auch auf unebenem Untergrund abgestützt werden kann und so Unebenheiten des Untergrunds ausgeglichen werden können. Die innenseitig angeordnete Hubeinrichtung bewirkt ferner, dass die Auflieger unmittelbar aneinander gekoppelt werden können, da durch die innenseitig angeordnete Hubeinrichtung die äußeren Standardmaße der Auflieger nicht verändert werden. Vorteilhafterweise lassen sich mehrere der Auflieger mittels der Verbindungseinrichtung miteinander verbinden. Sind beispielsweise drei Auflieger miteinander mittels der Verbindungseinrichtung verbunden, kann das Chassis, das den mittleren der drei Auflieger trägt unter dem mittleren Auflieger herausgefahren werden, da dieser über die Verbindungseinrichtung von den beiden weiteren Aufliegern gehalten wird. Nach dem Herausfahren des Chassis wird der mittlere Auflieger mittels der Hubeinrichtung auf dem - ggf. unebenen - Untergrund abgestützt. Nun können auch die Chassis der beiden weiteren Auflieger unter diesen herausgefahren werden. Die Last der drei Auflieger wird nun über den mittleren Auflieger und dessen Hubeinrichtung aufgenommen und auf den Untergrund übertragen. Die Erfindung ist jedoch nicht auf drei Auflieger bzw. Fahrzeuge beschränkt, sondern grundsätzlich für jede beliebige Anzahl an Fahrzeugen einsetzbar.

Eine zweckmäßige Ausgestaltung der Erfindung ist dadurch gekennzeichnet, dass die Hubeinrichtung mindestens zwei vertikal verfahrbar eingerichtete Stützelemente umfasst. Die Stützelemente sind als eine Last aufnehmende Verbindung eingerichtet und ausgebildet, dienen also einerseits der Abstützung des Aufliegers auf dem Untergrund. Andererseits ermöglichen die Stützelemente eine Bewegung des Aufliegers in der Vertikalen. So kann bzw. können sowohl die Höhe des Aufliegers mittels der Stützelemente eingestellt, als auch Unebenheiten des Untergrunds ausgeglichen werden. Besonders bevorzugt umfasst die Hubeinrichtung vier vertikal verfahrbar eingerichtete Stützelemente, wobei die Stützelemente vorzugsweise in den jeweiligen Eckbereichen der Auflieger angeordnet sind.

Eine bevorzugte Weiterbildung der Erfindung zeichnet sich dadurch aus, dass die Stützelemente als Hydraulikzylinder ausgebildet sind. Dies bietet den Vorteil hoher Robustheit der verfahrbar eingerichteten Stützelemente. Ferner können die Hydraulikzylinder mittels einer am Fahrzeug vorhandenen Hydrauliksteuerung betrieben werden.

Eine weitere zweckmäßige Ausbildung der Erfindung ist dadurch gekennzeichnet, dass die Hydraulikzylinder mittels Hydraulikleitungen jeweils mit einer in einer Wand des Aufliegers angeordneten Schnellkupplung verbunden sind. So lässt sich mittels der Schnellkupplungen außen an dem Auflieger eine entsprechende Hydrauliksteuerung anschließen mittels derer die einzelnen Hydraulikzylinder bewegt werden. Dies bietet den Vorteil, dass die Auflieger selbst über keine eigene Hydrauliksteuerung verfügen müssen und grundsätzlich mit nur einer Hydrauliksteuerung die Hydraulikzylinder mehrere Auflieger nach einander bewegt werden können. Ferner ist es möglich, eine im Fahrzeug vorhandene Hydrauliksteuerung auch für das Bewegen der Hydraulikzylinder zu benutzen.

Gemäß einer weiteren bevorzugten Ausführungsform ist an mindestens eine der Hydraulikleitungen eine Druckmesseinrichtung angeschlossen. Mittels der Druckmesseinrichtung lässt sich der Druck innerhalb der Hydraulikleitungen anzeigen, der einen Rückschluss auf die auf den Hydraulikzylinder einwirkenden Kräfte zulässt. Anhand dieser Druckanzeige kann die aktuelle Lastverteilung des Aufliegers auf die jeweiligen Hydraulikzylinder ermittelt und durch entsprechendes Senken oder Anheben der Druckverhältnisse in den entsprechenden Hydraulikleitungen bzw. Hydraulikzylindern eine gleichmäßige Lastverteilung erzielt werden.

Eine weitere zweckmäßige Ausgestaltung der Erfindung ist dadurch gekennzeichnet, dass die Verbindungseinrichtung mindestens zwei Verbindungselemente umfasst, die jeweils an den Längsseiten des Aufliegers angeordnet sind. Mittels der Verbindungselemente sind die Auflieger seitlich miteinander verkoppelbar eingerichtet und ausgebildet.

Gemäß einer weiteren bevorzugten Ausbildung der Erfindung sind die Verbindungselemente als Schraubverbindungen ausgebildet. So lassen sich die Auflieger auf einfache und schnelle Weise miteinander verbinden und ggf. später wieder trennen. Eine weitere zweckmäßige Ausgestaltung der Erfindung ist dadurch gekennzeichnet, dass an den Längsseiten eines der Auflieger mindestens zwei Auflieger mittels der Verbindungseinrichtung aneinander gekoppelt sind. Durch diese Anordnung ist es möglich, wie bereits zuvor ausgeführt, die Chassis nach und nach unter den Aufliegern herauszufahren und so vollständig von den Aufliegern zu lösen. Der Verbindung der Auflieger kommt damit zugleich eine Halte- bzw. Abstützfunktion zu. Sollen nur insgesamt nur zwei Auflieger miteinander gekoppelt werden, können die Auflieger mittels seitlicher Stützen auf dem Untergrund abgestützt werden. Die Auflieger weisen dazu Aufnahmen zur Aufnahme der seitlichen Stützen auf.

Des Weiteren wird die Aufgabe durch ein entsprechendes Verfahren mit den eingangs genannten Merkmalen dadurch gelöst, dass das Verfahren ferner die folgenden Schritte umfasst: Heranfahren mindestens zweier zweiter Fahrzeuge an die Längsseiten eines ersten Fahrzeugs, Ausrichten der Auflieger der zweiten Fahrzeuge relativ zu dem Auflieger des ersten Fahrzeugs mittels der jeweils zum Verändern der Positionen relativ zum Chassis ausgebildeten Positionierungseinrichtungen der Fahrzeuge, horizontales Bewegen der Auflieger der zweiten Fahrzeuge zum bündigen Koppeln der Längsseiten der Auflieger der zweiten Fahrzeuge durch Verändern der horizontalen Position der Auflieger mittels der Positionierungseinrichtungen der zweiten Fahrzeuge, Verbinden der Auflieger der zweiten Fahrzeuge mit dem Auflieger des ersten Fahrzeugs mittels Verbindungseinrichtungen, Lösen des Aufliegers des ersten Fahrzeugs vom Chassis und Herausfahren des Chassis unter dem Auflieger, Abstützen des Aufliegers des ersten Fahrzeugs mittels einer Hubeinrichtung auf dem Untergrund. Das erfindungsgemäße Verfahren bietet den Vorteil, dass die Auflieger der Fahrzeuge möglichst schnell miteinander gekoppelt werden können. Die Fahrzeuge, die zum Manövrieren einen obligatorischen Mindestabstand voneinander einhalten müssen, werden zunächst nebeneinander ausgerichtet. Im nächsten Schritt werden mittels der Positionierungseinrichtung die Auflieger der zweiten Fahrzeuge in Richtung des ersten, mittleren Fahrzeugs bewegt. Ggf. werden durch Bewegen der Auflieger in vertikaler Richtung die Auflieger in der Höhe nivelliert. Anschließend werden die Auflieger bündig miteinander gekoppelt und mittels der Verbindungseinrichtung miteinander verbunden. Nun ist es möglich, den Auflieger von dem Chassis des ersten Fahrzeugs zu lösen und das Chassis unter dem Auflieger herauszufahren. Der Auflieger des ersten Fahrzeugs wird über die Verbindungseinrichtung, mit der dieser Auflieger mit anderen Aufliegern der zweiten Fahrzeuge verbunden ist, gehalten und auf dem Untergrund abgestützt. Mittels der Hubeinrichtung wird der Auflieger des ersten Fahrzeugs anschließend auf dem Untergrund abgestützt.

Gemäß einer weiteren bevorzugten Ausführungsform umfasst das Verfahren weiter das Lösen der Auflieger der zweiten Fahrzeuge von den jeweiligen Chassis und Herausfahren der jeweiligen Chassis unter den zweiten Aufliegern, Abstützen der Auflieger der zweiten Fahrzeuge mittels der Hubeinrichtungen auf dem Untergrund. Aufgrund der Abstützung des Aufliegers des ersten Fahrzeugs mittels der Hubeinrichtung ist es möglich, die Auflieger von den zweiten Chassis zu lösen und die Chassis unter den zweiten Aufliegern herauszufahren. Die Auflieger der zweiten Fahrzeuge "hängen" nach dem Herausfahren der jeweiligen Chassis frei über dem Untergrund und werden durch die Verbindung zu dem Auflieger des ersten Fahrzeugs, der mittels der Hubeinrichtung auf dem Untergrund abgestützt ist, gehalten. Nachdem die zweiten Fahrzeuge unter den jeweiligen Aufliegern entfernt worden sind, werden die Auflieger der zweiten Fahrzeuge mittels der Hubeinrichtungen auf dem Untergrund abgestützt.

Gemäß einer weiteren bevorzugte Ausführung der Erfindung umfasst das erfindungsgemäße Verfahren weiter die Schritte: Heranfahren mindestens zweier weiterer Fahrzeuge an die Längsseiten der ersten und zweiten miteinander verbundenen Auflieger, Ausrichten der Auflieger der weiteren Fahrzeuge relativ zu den miteinander verbundenen Aufliegern mittels der jeweils zum Verändern der Positionen relativ zum Chassis ausgebildeten Positionierungseinrichtungen der Fahrzeuge, horizontales Bewegen der Auflieger der weiteren Fahrzeuge zum bündigen Koppeln der Längsseiten der Auflieger der weiteren Fahrzeuge durch Verändern der horizontalen Position der Auflieger mittels der Positionierungseinrichtungen der weiteren Fahrzeuge, Verbinden der Auflieger der weiteren Fahrzeuge mit den miteinander verbundenen Aufliegern mittels der Verbindungseinrichtung, Lösen der Auflieger der weiteren Fahrzeuge vom jeweiligen Chassis und Herausfahren der jeweiligen Chassis unter den Aufliegern, Abstützen der Auflieger der weiteren Fahrzeuge mittels der jeweiligen Hubeinrichtungen auf dem Untergrund. Auf diese Weise kann eine beliebige Anzahl von Aufliegern miteinander gekoppelt werden. Der zuvor beschriebene Verfahrensablauf ist so oft zu wiederholen, bis die gewünschte Anzahl von Aufliegern miteinander verkoppelt ist und das aus diesen Aufliegern bestehende mobile Gebäude die gewünschte Größe erreicht hat.

Gemäß einer besonders bevorzugten Ausbildung der Erfindung erfolgt das Absenken der miteinander verbundenen Auflieger mittels der Hubeinrichtungen. Ist die gewünschte Anzahl der Auflieger miteinander verbunden worden, können die Auflieger mittels der Hubeinrichtung abgesenkt werden. Grundsätzlich ist es so möglich, sämtliche Auflieger und damit das mobile Gebäude vollständig auf einem im zumindest im Wesentlichen ebenen Untergrund aufzusetzen. Ist der Untergrund dagegen uneben, kann mittels der Hubeinrichtungen jeder Auflieger individuell soweit abgesenkt werden, dass das Gebäude insgesamt waagerecht ausgerichtet ist. Ferner ist es möglich, die Auflieger derart abzusenken, dass das aus den Aufliegern gebildete mobile Gebäude eine vorgegebene Neigung gegenüber dem Untergrund aufweist.

Weitere bevorzugte und/oder zweckmäßige Merkmale und Ausgestaltungen der Erfindung ergeben sich aus den Unteransprüchen und der Beschreibung. Besonders bevorzugte Ausführungsformen des erfindungsgemäßen Fahrzeugs, der Anordnung aus mindestens drei der Fahrzeuge sowie des Verfahrens zur Kopplung mehrerer Auflieger werden anhand der beigefügten Zeichnung näher erläutert. In der Zeichnung zeigt:
- Fig. 1: eine beispielhafte Anordnung mehrerer erfindungsgemäßer Fahrzeuge vor der Kopplung der Auflieger,
- Fig. 2: die in Fig.1 gezeigten Fahrzeuge nach der Kopplung der Auflieger,
- Fig. 3: die in den Figuren 1 und 2 gezeigten Fahrzeuge nach dem Herausfahren der Chassis sowie den Kopplungsvorgang von weiteren Aufliegern,
- Fig. 4: eine beispielhafte Anordnung mehrer Auflieger,
- Fig. 5: eine Seitenansicht eines Aufliegers,
- Fig. 6: eine Seitenansicht mehrere gekoppelter Auflieger auf unebenem Untergrund und
- Fig. 7: Seitenansichten der Längs- und Querseiten eines Aufliegers im abgesenkten- und nicht abgesenkten Zustand auf unebenem Untergrund.

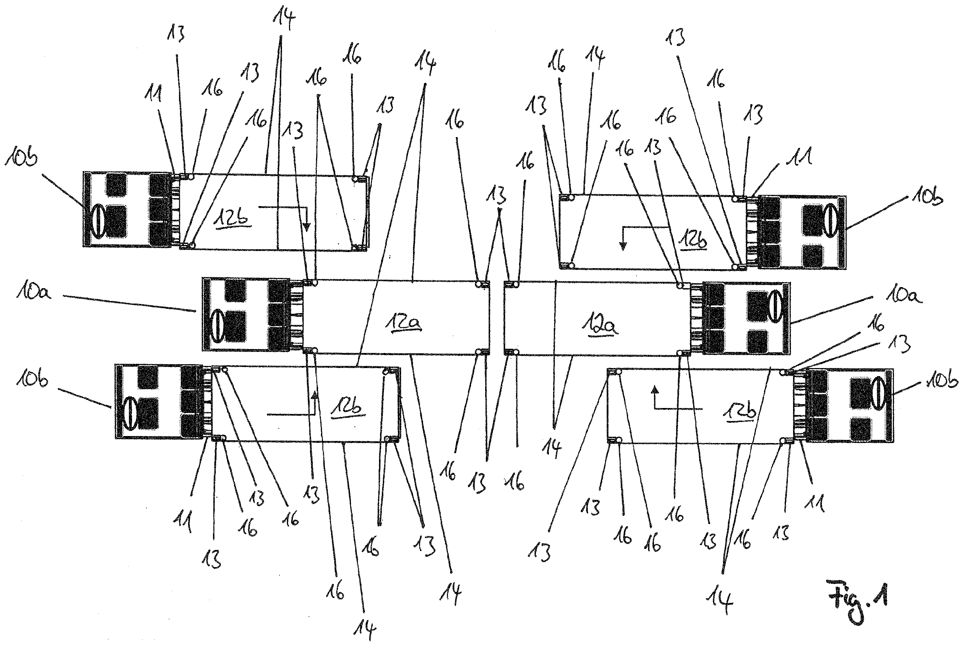

Figur 1 zeigt eine beispielhafte Anordnung von sechs erfindungsgemäßen Fahrzeugen 10. Die Anzahl der Fahrzeuge 10 ist in der vorliegenden Figur nur beispielhaft gewählt und die vorliegende Erfindung nicht auf diese Anzahl beschränkt, vielmehr ist die Anzahl der Fahrzeuge beliebig wählbar. Jedes der Fahrzeuge 10 weist ein Chassis 11 und einen Auflieger 12 auf. Das Chassis ist vorzugsweise ein LKW-Chassis auf dem der Auflieger 12, beispielsweise ein Standard-Container oder dergleichen, angeordnet ist. Der Auflieger 12 ist vollständig vom dem Chassis 11 lösbar ausgebildet. Der Auflieger 12 und das Chassis 11 lassen sich daher vollständig voneinander trennen. Das Fahrzeug 10 weist eine - in den Figuren nicht gezeigte - Positionierungseinrichtung auf. Die Positionierungseinrichtung ist zum Verändern der Position des Aufliegers 12 relativ zu dem Chassis 11 ausgebildet und eingerichtet. Die Positionierungseinrichtung ist insbesondere zum horizontalen Bewegen des Aufliegers 12 ausgebildet und eingerichtet. Weiter bevorzugt ist die Positionierungseinrichtung zusätzlich zum vertikalen Ausrichten des Aufliegers 12 ausgebildet. Die Positionierungseinrichtung ist beispielsweise eine hydraulisch oder elektrisch angetriebene Einrichtung, die zwischen dem Auflieger 12 und dem Chassis 11 angeordnet ist. Die Positionierungseinrichtung umfasst dabei sowohl eine vertikale Positionierungseinrichtung als auch eine horizontale Positionierungseinrichtung. Die horizontale und vertikale Positionierungseinrichtungen können integraler Bestandteil einer einzigen Positionierungseinrichtung oder als jeweils separate Baugruppen ausgebildet sein. Vorzugsweise ist die vertikale Positionierungseinrichtung zwischen dem Auflieger 12 und dem Chassis 11 angeordnet. Alternativ ist die vertikale Positionierungseinrichtung unterhalb des Chassis 11 angeordnet. Besonders bevorzugt ist die vertikale Positionierungseinrichtung als Chassishubeinrichtung eingerichtet und ausgebildet, so dass mittels dieser die vertikalen Positionen des Chassis 11 und des Auflieger 12 zugleich verändert werden können.

Die in der Figur 1 gezeigte Anordnung umfasst beispielsweise sechs Fahrzeuge 10, wobei zwei der Auflieger 12 rückwärtig miteinander, beispielsweise über ein Durchgangselement 22 verkoppelt sind. Zur einfacheren Darstellung wird in der folgenden Beschreibung jeweils nur auf eine Gruppe von Fahrzeugen 10 Bezug genommen. Die Ausführungen für die andere Gruppe von Fahrzeugen 10, die über das Durchgangselement 22 miteinander verkoppelt sind, gelten analog.

Der Auflieger 12 umfasst ferner eine Verbindungseinrichtung, die vorzugsweise mindestens zwei Verbindungselemente 13 umfasst, die jeweils an den Längsseiten 14 des Aufliegers 12 angeordnet sind. Alternativ sind die Verbindungselemente 13 am Boden- und/oder Dachbereich der Auflieger 12 angeordnet. Die Verbindungseinrichtung bzw. die Verbindungselemente 13 ist/sind zum Verbinden des Aufliegers 12 mit weiteren Aufliegern 12 ausgebildet und eingerichtet. Vorzugsweise sind die Verbindungselemente 13 als Schraubverbindungen ausgebildet. Besonders bevorzugt sind in den Längsseiten 14, also den Seitenflächen der Auflieger 12, entsprechende Ausnehmungen vorgesehen, die beim Verbinden der Auflieger 12 korrespondierend zueinander ausgerichtet sind. Durch diese Ausnehmungen wird zum Verbinden der Auflieger beispielsweise eine Gewindeschraube geführt, und die Auflieger 12 werden durch Verschrauben miteinander verbunden. Alternativ sind die Verbindungselemente 13 als selbstverriegelnde Verbindung ausgebildet.

In dem Auflieger 12 ist innenseitig eine Hubeinrichtung angeordnet, die zum Abstützen des Aufliegers 12 und/oder Verändern der Position des Aufliegers 12 relativ zum Untergrund 15 ausgebildet und eingerichtet ist. Vorzugsweise umfasst die Hubeinrichtung mindestens zwei vertikal verfahrbar eingerichtete Stützelemente 15. Besonders bevorzugt umfasst die Hubeinrichtung mindestens vier der Stützelemente 15.

Zur Kopplung mehrerer Auflieger 12 werden zunächst zwei zweite Fahrzeuge 10b an die Längsseiten 14 eines ersten Fahrzeugs 10a gefahren. Dabei halten die Fahrzeuge 10a, 10b vorzugsweise einen Mindestabstand zueinander ein. Sind die Fahrzeuge 10a, 10b nebeneinander positioniert, werden die Auflieger 12b der zweiten Fahrzeuge 10b relativ zu dem Auflieger 12a des ersten Fahrzeugs 10a mittels einer jeweiligen Positionierungseinrichtung ausgerichtet. Vorzugsweise werden die Auflieger 12a, 12b parallel zueinander ausgerichtet und die Höhen der Auflieger 12a, 12b aufeinander angepasst. Anschließend werden die Auflieger 12b der zweiten Fahrzeuge 10b horizontal mittels der Positionierungseinrichtung bewegt, um die Längsseiten 14 der Auflieger 12a, 12b bündig miteinander zu koppeln. Dies geschieht durch Verändern der horizontalen Position der Auflieger 12b mittels der Positionierungseinrichtung der zweiten Fahrzeuge 10b. Die Auflieger 12a, 12b der ersten und zweiten Fahrzeuge 10a, 10b werden anschließend mittels der Verbindungseinrichtungen miteinander verbunden und so miteinander verkoppelt.

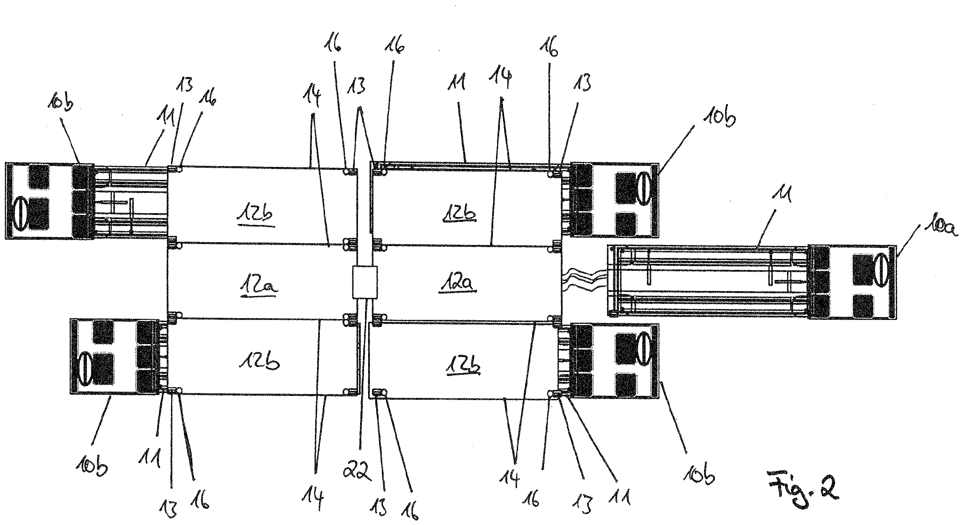

Die Fig. 2 zeigt die Fahrzeuge nach der Kopplung der Auflieger 12a, 12b. Der Auflieger 12a des ersten Fahrzeugs 10a wird nun vom Chassis 11 gelöst und unter dem Auflieger 12a herausfahren. Zur besseren Übersichtlichkeit ist in der Figur 2 nur eine Auswahl der Bezugszeichen wiedergegeben, insbesondere die Verbindungselemente 13 und die Stützelemente 16 der Auflieger 12a, 12b sind nur teilweise mit Bezugszeichen versehen. Aufgrund des vergleichbaren Aufbaus der Fahrzeuge 10a, 10b gelten diese auch für die nicht explizit mit Bezugszeichen versehenen Bauteile. Der Auflieger 12a wird über die mittels der Verbindungseinrichtungen bzw. den Verbindungselementen 13 vorhandenen Verbindung zu den Aufliegern 12b gehalten. Mittels der Hubeinrichtung bzw. der Stützelemente 16 wird der Auflieger 12a auf dem Untergrund 15 abgestützt.

Aufgrund der Abstützung des Aufliegers 12a ist es nun möglich, die Auflieger 12b der zweiten Fahrzeuge 10b von den jeweiligen Chassis 11 zu lösen und die Chassis 11 unter den Aufliegern 12b der zweiten Fahrzeuge 10b herauszufahren. Nach dem Herausfahren der Chassis 11 unter den Aufliegern 12b der zweiten Fahrzeuge 10b werden diese durch die Verbindung mittels der Verbindungseinrichtung bzw. den Verbindungselementen 13 gehalten und über den Auflieger 12a und dessen Hubeinrichtung bzw. dessen Stützelemente 16 auf dem Untergrund 15 abgestützt. Sind die Chassis 11 unter den Aufliegern 12b der zweiten Fahrzeuge 10b entfernt worden, werden die Auflieger 12b der zweiten Fahrzeuge 10b mittels der jeweiligen Hubeinrichtung bzw. der jeweiligen Stützelemente 16 auf dem Untergrund abgestützt.

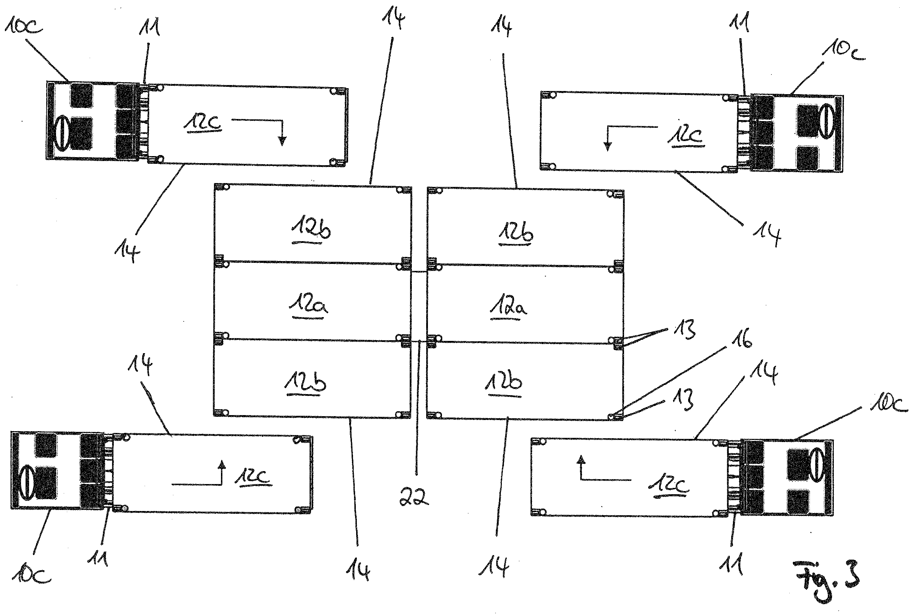

Figur 3 zeigt die Auflieger 12a, 12b nach erfolgter Kopplung und mit herausgefahrenem Chassis 11. Die Auflieger 12a, 12b sind mittels der Hubeinrichtung bzw. mittels der Stützeelemente 16 auf dem Untergrund abgestützt. Die Anzahl der miteinander gekoppelten Auflieger 12a, 12b kann beliebig erweitert werden. Zwei weitere Fahrzeuge 10c werden an die Längsseiten 14 der ersten und zweiten miteinander verbundenen Auflieger 12a, 12b herangefahren. Die Auflieger 12c der weiteren Fahrzeuge 10c werden relativ zu den miteinander verbundenen Aufliegern 12a, 12b mittels der jeweils zum Verändern der Positionen relativ zum Chassis ausgebildeten Positionierungseinrichtungen ausgerichtet. Durch horizontales Bewegen der Auflieger 12c der weiteren Fahrzeuge 10c erfolgt ein bündiges Koppeln der Längsseiten 14 der Auflieger 12c der weiteren Fahrzeuge 10c durch Verändern der horizontalen Position der Auflieger 12c mittels der Positionierungseinrichtungen der weiteren Fahrzeuge 10c. Die Auflieger 12c der weiteren Fahrzeuge 10c werden mit den miteinander verbundenen Aufliegern 12a, 12b mittels der Verbindungseinrichtung bzw. den Verbindungselementen 13 miteinander verbunden. Anschließend werden die Auflieger 12c der weiteren Fahrzeuge 10c von den jeweiligen Chassis 11 gelöst und die Chassis 11 unter den Aufliegern 12c herausgefahren. Nach dem Herausfahren der Chassis 11 werden die Auflieger 12c der weiteren Fahrzeuge 10c mittels der jeweiligen Hubeinrichtungen bzw. der Stützelemente 13 auf dem Untergrund 15 abgestützt. Auf diese Weise ist es möglich, eine beliebige Anzahl weiterer Auflieger 12 miteinander zu koppeln. Der zuvor beschriebene Verfahrensablauf ist entsprechend oft zu wiederholen bis die gewünschte Anzahl der Auflieger miteinander verkoppelt ist.

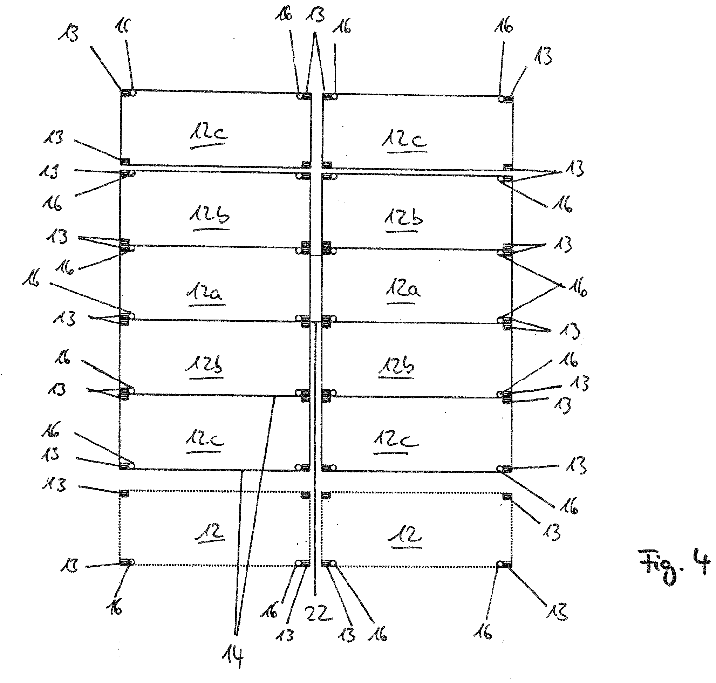

Figur 4 zeigt eine beispielhafte Anordnung mehrerer miteinander gekoppelter Auflieger 12. Die Auflieger 12 sind vorzugsweise an den Längsseiten 14 mittels der Verbindungseinrichtung bzw. den Verbindungselementen 13 aneinander gekoppelt. Auch in der Figur 4 sind die Verbindungselemente 13, die Stützelemente 16 und die Längsseiten 14 zur besseren Übersichtlichkeit nur teilweise angegeben.

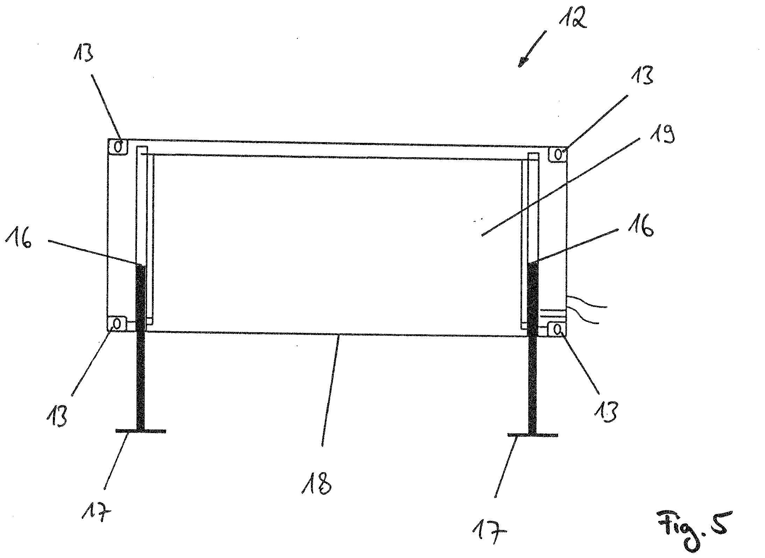

Eine Seitenansicht des Aufliegers 12 geht aus der Figur 5 hervor. Der in der Figur 5 dargestellte Auflieger 12 ist mit transparenten Längsseiten 14 dargestellt, so dass die Stützelemente 16 der Hubeinrichtung sichtbar dargestellt sind. Bevorzugt sind die Stützelemente 16 als Hydraulikzylinder ausgebildet. Alternativ können die Stützelemente 16 elektromotorisch oder pneumatisch ausgebildet sein. Die Stützelemente 16 sind vorzugsweise vertikal verfahrbar eingerichtet. Im vollständig eingezogenen Zustand schließen die Auflageelemente 17 der Stützelemente 16 flächig mit der Unterseite 18 des Aufliegers 12 ab. Die Unterseite 18 des Aufliegers 12 weist ferner eine Ausnehmung auf, durch die die Stützelemente 16 vom Innenraum 19 des Aufliegers 12 hindurchgeführt sind. Vorzugsweise sind die Stützelemente 16 jeweils im Eckbereich der Auflieger 12 angeordnet. Besonders bevorzugt sind die Stützelemente 16 gekapselt eingerichtet, d.h. durch geeignete Mittel vom Innenraum 19 getrennt angeordnet, so dass über die Ausnehmung der Unterseite 18 des Aufliegers 12 keine Verunreinigungen in den Innenraum 19 des Aufliegers 12 gelangen können. Weiter bevorzugt sind die Mittel zur fluid- und gasdichten Trennung des Innenraums 19 von den Bereichen außerhalb des Aufliegers 12 entsprechend ausgebildet und eingerichtet.

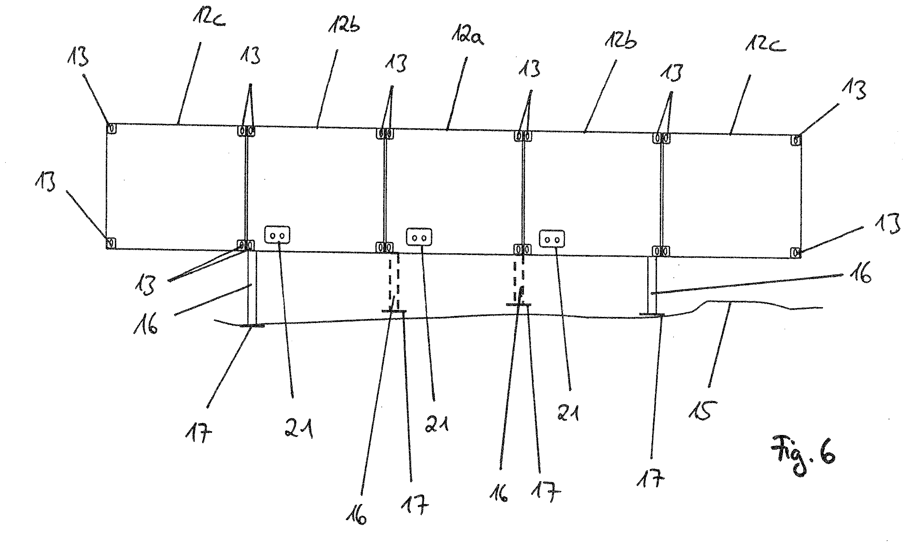

Figur 6 zeigt eine Seitenansicht mehrerer gekoppelter Auflieger 12 auf unebenem Untergrund 15. Zur waagerechten Ausrichtung der Auflieger 12 sind die Stützelemente 16 unterschiedlich weit aus- bzw. eingefahren, so dass Unebenheiten des Untergrunds 15 ausgeglichen werden. Die als Hydraulikzylinder ausgebildeten Stützelemente 15 sind mittels - in der Figur 6 nicht gezeigten - Hydraulikleitungen jeweils mit einer in einer Wand des Aufliegers 12 verbundenen Schnellkupplung 21 verbunden. Die Schnellkupplung 21 dient der Verbindung des jeweiligen Hydrauliksystems eines der Hydraulikzylinder mit einer Hydrauliksteuereinrichtung. Anders ausgedrückt verfügen die Auflieger 12 über keine eigene Hydrauliksteuereinrichtung, vielmehr wird eine externe Hydrauliksteuereinrichtung mittels der Schnellkupplungen 21 mit dem entsprechenden Hydrauliksystem bei Bedarf verbunden. Beispielsweise wird hierzu die Hydrauliksteuerung der Positionierungseinrichtung oder eine andere Hydrauliksteuerung eines der Fahrzeuge 10 verwendet. Die Stützelemente 16 können jeweils einzeln oder bei Bedarf gleichzeitig aus- bzw. eingefahren werden. Besonders bevorzugt sind die Stützelemente 16 fernsteuerbar ausgebildet und eingerichtet.

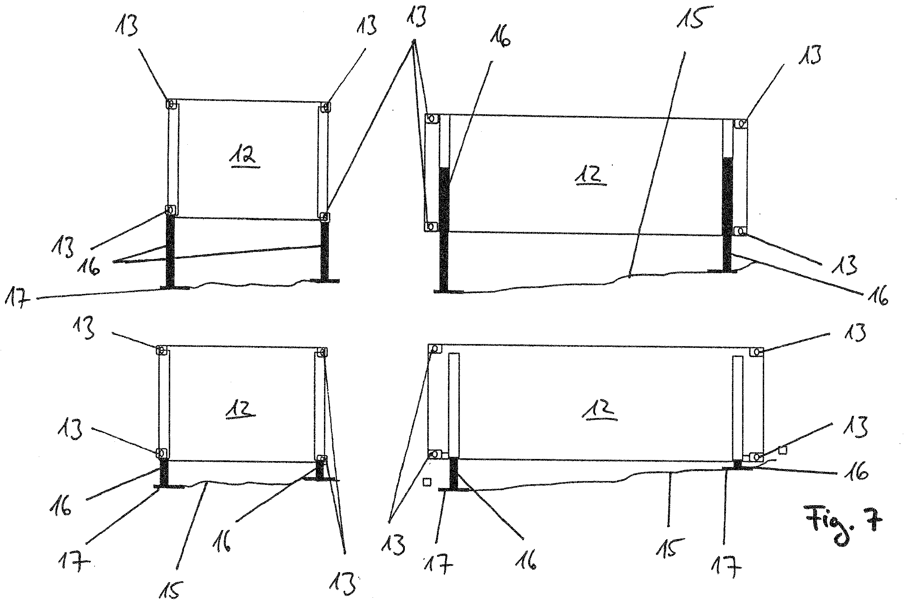

In der Figur 7 sind Seitenansichten der Längs- und Querseiten eines der Auflieger 12 im abgesenkten- und nicht abgesenkten Zustand auf unebenem Untergrund gezeigt. Vorzugsweise ist an mindestens eine der Hydraulikleitungen eine Druckmesseinrichtung angeschlossen. Besonders bevorzugt ist jedem Hydraulikzylinder und damit jedem Hydrauliksystem eine Druckmesseinrichtung zugeordnet und an die jeweilige Hydraulikleitung angeschlossen. Mittels der Druckmesseinrichtung kann der Hydraulikdruck und damit die Lastverteilung der einzelnen Hydraulikzylinder angezeigt werden. Durch gezieltes Verringern bzw. Erhöhen des Hydraulikdrucks kann auf diese Weise die Lastverteilung optimal ausgeglichen und gleichmäßig auf alle Hydraulikzylinder verteilt werden. Ferner ist es möglich, nur eine beschränkte Anzahl der vorhandenen Stützelemente 16, vorzugsweise gerade so viele der Stützelemente 16, dass die gewünschte Tragfähigkeit erreicht wird, auszufahren.

Vorzugsweise erfolgt das Absenken der miteinander verbunden Auflieger 12 mittels der Hubeinrichtung bzw. mittels der Stützelemente 13. Ist der Untergrund 15, wie in der Figur 7 angedeutet, unebenen, kann durch individuelle Ansteuerung der einzelnen Stützelemente 15 die gesamte Anordnung aus mehreren der Auflieger 12 waagerecht ausgerichtet werden, indem die Stützelemente dem Profil des Untergrunds 15 entsprechend mehr bzw. weniger weit aus- oder eingefahren werden. Auf diese Weise ist es ferner möglich, die gesamte Anordnung aus mehreren Aufliegern 12 um einen beliebigen Winkel, vorzugsweise um einen Winkel kleiner als 12°, gegenüber der Horizontalen zu neigen. Die Absenkbarkeit der gesamten Anordnung wirkt sich vorteilhaft auf die Möglichkeit der Tarnung im Gelände aus. So kann die gesamte Anordnung beispielsweise in Geländevertiefungen oder vor Geländesteigungen in einer möglichst tiefen Position positioniert und angeordnet werden.

Ist die Anordnung aus mehreren der Auflieger 12 auf dem Untergrund 15 abgesetzt, wird die Hydrauliksteuerung von den entsprechenden Schnellkupplungen 21 abgenommen. Sofern die Auflieger 12 auf dem Untergrund 15 aufliegen sind die Stützelemente 15 bzw. die Hydraulikzylinder so weit wie möglich eingefahren, so dass das zum Bewegen der Hydraulikzylinder erforderliche Hydrauliköl weitestgehend in die Hydrauliksteuerung bzw. einen zugehörigen Hydraulikbehälter zurückgeflossen ist und darin zur weiteren Verwendung zur Verfügung steht.

Das zuvor beschriebene Verfahren zum Koppeln mehrerer Auflieger 12 ist selbstverständlich umkehrbar, um die Auflieger 12 wieder voneinander zu lösen. Sollen die Auflieger 12 voneinander gelöst werden, sind die zuvor beschriebenen Schritte in umgekehrter Reihenfolge auszuführen, wobei die Fahrrichtung der Chassis 11 entsprechend umzukehren ist.

## Patentansprüche

1. Fahrzeug (10) in modularer Bauweise umfassend
ein Chassis (11) und einen vollständig vom Chassis (11) lösbaren Auflieger (12), wobei
das Fahrzeug (10) eine Positionierungseinrichtung aufweist, die zum Verändern der Position des Aufliegers (12) relativ zum Chassis (11) ausgebildet und eingerichtet ist,
**dadurch gekennzeichnet, dass**
der Auflieger (12) eine Verbindungseinrichtung umfasst, die zum Verbinden des Aufliegers (12) mit mindestens einem weiteren Auflieger (12) ausgebildet und eingerichtet ist und
in dem Auflieger (12) innenseitig eine Hubeinrichtung angeordnet ist, die zum Abstützen des Aufliegers (12) und/oder Verändern der Position des Aufliegers (12) relativ zum Untergrund (15) ausgebildet und eingerichtet ist.

2. Fahrzeug nach Anspruch 1, **dadurch gekennzeichnet, dass** die Hubeinrichtung mindestens zwei vertikal verfahrbar eingerichtete Stützelemente (16) umfasst.

3. Fahrzeug nach einem der vorangehenden Ansprüche, **dadurch gekennzeichnet, dass** die Stützelemente (16) als Hydraulikzylinder ausgebildet sind.

4. Fahrzeug nach Anspruch 3, **dadurch gekennzeichnet, dass** die Hydraulikzylinder mittels Hydraulikleitungen jeweils mit einer in einer Wand (20) des Aufliegers (12) angeordneten Schnellkupplung (21) verbunden sind.

5. Fahrzeug nach einem der Ansprüche 3 oder 4, **dadurch gekennzeichnet, dass** an mindestens eine der Hydraulikleitungen eine Druckmesseinrichtung angeschlossen ist.

6. Fahrzeug nach einem der vorangehenden Ansprüche, **dadurch gekennzeichnet, dass** die Verbindungseinrichtung mindestens zwei Verbindungselemente (13) umfasst, die jeweils an den Längsseiten (14) des Aufliegers (12) angeordnet sind.

7. Fahrzeug nach Anspruch 6, **dadurch gekennzeichnet, dass** die Verbindungselemente (13) als Schraubverbindungen ausgebildet sind.

8. Anordnung aus mindestens drei Fahrzeugen nach einem der Ansprüche 1 bis 7, **dadurch gekennzeichnet, dass** an den Längsseiten (14) eines der Auflieger (12) mindestens zwei Auflieger (12) mittels der Verbindungseinrichtung aneinander gekoppelt sind.

9. Verfahren zur Kopplung mehrerer Auflieger (12) eines Fahrzeugs in modularer Bauweise, umfassend die Schritte:
Heranfahren mindestens zweier zweiter Fahrzeuge (10b) an die Längsseiten (14) eines ersten Fahrzeugs (10a),
Ausrichten der Auflieger (12b) der zweiten Fahrzeuge (10b) relativ zu dem Auflieger (12a) des ersten Fahrzeugs (10a) mittels der jeweils zum Verändern der Positionen relativ zum Chassis (11) ausgebildeten Positionierungseinrichtungen der Fahrzeuge (10),
horizontales Bewegen der Auflieger (12b) der zweiten Fahrzeuge (10b) zum bündigen Koppeln der Längsseiten (14) der Auflieger (12b) der zweiten Fahrzeuge (10b) durch Verändern der horizontalen Position der Auflieger (12b) mittels der Positionierungseinrichtungen der zweiten Fahrzeuge (10b),
Verbinden der Auflieger (12b) der zweiten Fahrzeuge (10b) mit dem Auflieger (12a) des ersten Fahrzeugs (10a) mittels Verbindungseinrichtungen,
Lösen des Aufliegers (12a) des ersten Fahrzeugs (10a) vom Chassis (11) und Herausfahren des Chassis (11) unter dem Auflieger (12a),
Abstützen des Aufliegers (12a) des ersten Fahrzeugs (10a) mittels einer Hubeinrichtung auf dem Untergrund (15).

10. Verfahren nach Anspruch 9, weiter umfassend
Lösen der Auflieger (12b) der zweiten Fahrzeuge (10b) von den jeweiligen Chassis (11) und Herausfahren der jeweiligen Chassis (11) unter den zweiten Aufliegern (12b),
Abstützen der Auflieger (12b) der zweiten Fahrzeuge (10b) mittels der Hubeinrichtungen auf dem Untergrund (15).

11. Verfahren nach Anspruch 9 oder 10, weiter umfassend
Heranfahren mindestens zweier weiterer Fahrzeuge (10c) an die Längsseiten (14) der ersten und zweiten miteinander verbundenen Auflieger (12a, 12b),
Ausrichten der Auflieger (12c) der weiteren Fahrzeuge (10c) relativ zu den miteinander verbundenen Aufliegern (12a, 12b) mittels der jeweils zum Verändern der Positionen relativ zum Chassis (11) ausgebildeten Positionierungseinrichtungen der Fahrzeuge (10c),
horizontales Bewegen der Auflieger (12c) der weiteren Fahrzeuge (10c) zum bündigen Koppeln der Längsseiten (14) der Auflieger (12c) der weiteren Fahrzeuge (10c) durch Verändern der horizontalen Position der Auflieger (12c) mittels der Positionierungseinrichtungen der weiteren Fahrzeuge (10c),
Verbinden der Auflieger (12c) der weiteren Fahrzeuge (10c) mit den miteinander verbundenen Aufliegern (12a, 12b) mittels der Verbindungseinrichtung,
Lösen der Auflieger (12c) der weiteren Fahrzeuge (10c) von den jeweiligen Chassis (11) und Herausfahren der jeweiligen Chassis (11) unter den Aufliegern (12c),
Abstützen der Auflieger (12c) der weiteren Fahrzeuge (10c) mittels der jeweiligen Hubeinrichtungen auf dem Untergrund (15).

12. Verfahren nach einem der Ansprüche 9 bis 11, **dadurch gekennzeichnet, dass**
das Absenken der miteinander verbundenen Auflieger (12) mittels der Hubeinrichtungen erfolgt.

## Claims

1. Vehicle (10) in a modular design comprising
a chassis (11) and a semi-trailer (12) completely detachable from the chassis (11), wherein
the vehicle (10) has a positioning device which is designed and configured for changing the position of the semi-trailer (12) relative to the chassis (11),
**characterised in that**
the semi-trailer (12) comprises a connecting device which is designed and configured for connecting the semi-trailer (12) to at least one further semi-trailer (12) and
arranged inside in the semi-trailer (12) is a lifting device which is designed and configured to support the semi-trailer (12) and/or change the position of the semi-trailer (12) relative to the ground (15).

2. Vehicle according to claim 1, **characterised in that** the lifting device comprises at least two support elements (16) configured to be vertically movable.

3. Vehicle according to one of the preceding claims, **characterised in that** the support elements (16) are designed as hydraulic cylinders.

4. Vehicle according to claim 3, **characterised in that** the hydraulic cylinders are connected by means of hydraulic lines to a quick coupling (21) arranged in a wall (20) of the semi-trailer (12).

5. Vehicle according to one of claims 3 or 4, **characterised in that** a pressure measuring device is connected to at least one of the hydraulic lines.

6. Vehicle according to any one of the preceding claims, **characterised in that** the connecting device comprises at least two connecting elements (13) which are each arranged on the long sides (14) of the semi-trailer (12).

7. Vehicle according to claim 6, **characterised in that** the connecting elements (13) are designed as threaded connections.

8. Arrangement of at least three vehicles according to any one of claims 1 to 7, **characterised in that** at least two semi-trailers (12) are coupled to each other on the long sides (14) of one of the semi-trailers (12) by means of the connecting device.

9. Method for coupling a plurality of semi-trailers (12) of a vehicle in a modular design, comprising the steps:
driving at least two second vehicles (10b) up to the long sides (14) of a first vehicle (10a),
aligning the semi-trailers (12b) of the second vehicles (10b) relative to the semi-trailer (12a) of the first vehicle (10a) by means of the positioning devices of the vehicles (10), designed to change the positions of each relative to the chassis (11),
horizontally moving the semi-trailers (12b) of the second vehicles (10b) to couple flush with the long sides (14) of the semi-trailers (12b) of the second vehicles (10b) by changing the horizontal position of the semi-trailers (12b) by means of the positioning devices of the second vehicles (10b),
connecting the semi-trailers (12b) of the second vehicles (10b) to the semi-trailer (12a) of the first vehicle (10a) by means of connecting devices,
detaching the semi-trailer (12a) of the first vehicle (10a) from the chassis (11) and driving the chassis (11) out from under the semi-trailer (12a),
supporting the semi-trailer (12a) of the first vehicle (10a) on the ground (15) by means of a lifting device.

10. Method according to claim 9, further comprising
detaching the semi-trailers (12b) of the second vehicles (10b) from the respective chassis (11) and driving the respective chassis (11) out from under the second semi-trailers (12b),
supporting the semi-trailers (12b) of the second vehicles (10b) on the ground (15) by means of the lifting devices.

11. Method according to claim 9 or 10, further comprising
driving at least two further vehicles (10c) up to the long sides (14) of the first and second interconnected semi-trailers (12a, 12b),
aligning the semi-trailers (12c) of the further vehicles (10c) relative to the interconnected semi-trailers (12a, 12b) by means of the positioning devices of the vehicles (10c) designed to change the positions of each relative to the chassis (11),
horizontally moving the semi-trailers (12c) of the further vehicles (10c) to couple flush with the long sides (14) of the semi-trailers (12c) of the further vehicles (10c) by changing the horizontal position of the semi-trailers (12c) by means of the positioning devices of the further vehicles (10c),
connecting the semi-trailers (12c) of the further vehicles (10c) to the interconnected semi-trailers (12a, 12b) by means of the connecting device, detaching the semi-trailers (12c) of the further vehicles (10c) from the respective chassis (11) and driving the respective chassis (11) out from under the semi-trailers (12c),
supporting the semi-trailers (12c) of the further vehicles (10c) on the ground (15) by means of the respective lifting devices.

12. Method according to any one of claims 9 to 11, **characterised in that**
the interconnected semi-trailers (12) are lowered by means of the lifting devices.

## Revendications

1. Véhicule (10) de conception modulaire, comprenant
un châssis (11) et une semi-remorque (12) entièrement détachable du châssis (11),
le véhicule (10) présentant un dispositif de positionnement qui est formé et conçu pour modifier la position de la semi-remorque (12) par rapport au châssis (11),
**caractérisé en ce que**
la semi-remorque (12) comprend un dispositif de liaison qui est formé et conçu pour relier la semi-remorque (12) à au moins une autre semi-remorque (12) et
qu'est agencé sur la face interne de la semi-remorque (12) un dispositif de levage qui est formé et conçu pour que la semi-remorque (12) repose sur lui et/ou pour modifier la position de la semi-remorque (12) par rapport au sol (15).

2. Véhicule selon la revendication 1, **caractérisé en ce que** le dispositif de levage comprend au moins deux éléments d'appui (16) conçus mobiles verticalement.

3. Véhicule selon l'une quelconque des revendications précédentes, **caractérisé en ce que** les éléments d'appui (16) sont formés en tant que vérins hydrauliques.

4. Véhicule selon la revendication 3, **caractérisé en ce que** les vérins hydrauliques sont chacun reliés, au moyen de conduites hydrauliques, à un coupleur rapide (21) agencé dans une paroi (20) de la semi-remorque (12).

5. Véhicule selon l'une des revendications 3 ou 4, **caractérisé en ce qu'**un dispositif de mesure de pression est raccordé à au moins une des conduites hydrauliques.

6. Véhicule selon l'une quelconque des revendications précédentes, **caractérisé en ce que** le dispositif de liaison comprend au moins deux éléments de liaison (13) qui sont chacun agencés aux côtés longitudinaux (14) de la semi-remorque (12).

7. Véhicule selon la revendication 6, **caractérisé en ce que** les éléments de liaison (13) sont formés en tant que liaisons à vis.

8. Arrangement d'au moins trois véhicules selon l'une quelconque des revendications 1 à 7, **caractérisé en ce que** sur les côtés longitudinaux (14) d'une des semi-remorques (12) au moins deux semi-remorques (12) sont couplées l'une à l'autre au moyen du dispositif de liaison.

9. Procédé de couplage de plusieurs semi-remorques (12) d'un véhicule de conception modulaire, comprenant les étapes :
approcher au moins deux deuxièmes véhicules (10b) des côtés longitudinaux (14) d'un premier véhicule (10a),
aligner les semi-remorques (12b) des deuxièmes véhicules (10b) par rapport à la semi-remorque (12a) du premier véhicule (10a) au moyen des dispositifs de positionnement des véhicules (10) chacun formés pour modifier les positions par rapport au châssis (11),
déplacer horizontalement les semi-remorques (12b) des deuxièmes véhicules (10b) pour coupler de manière affleurante les côtés longitudinaux (14) des semi-remorques (12b) des deuxièmes véhicules (10b) en modifiant la position horizontale des semi-remorques (12b) au moyen des dispositifs de positionnement des deuxièmes véhicules (10b),
relier les semi-remorques (12b) des deuxièmes véhicules (10b) à la semi-remorque (12a) du premier véhicule (10a) au moyen de dispositifs de liaison,
détacher la semi-remorque (12a) du premier véhicule (10a) du châssis (11) et sortir le châssis (11) en dessous de la semi-remorque (12a),
appuyer la semi-remorque (12a) du premier véhicule (10a) au moyen d'un dispositif de levage sur le sol (15).

10. Procédé selon la revendication 9, comprenant en outre
détacher les semi-remorques (12b) des deuxièmes véhicules (10b) des châssis (11) respectifs et sortir les châssis (11) respectifs en dessous des deuxièmes semi-remorques (12b),
appuyer les semi-remorques (12b) des deuxièmes véhicules (10b) au moyen des dispositifs de levage sur le sol (15).

11. Procédé selon la revendication 9 ou 10, comprenant en outre
approcher au moins deux autres véhicules (10c) des côtés longitudinaux (14) des premières et des deuxièmes semi-remorques (12a, 12b) reliées entre-elles,
aligner les semi-remorques (12c) des autres véhicules (10c) par rapport aux semi-remorques (12a, 12b) reliées entre-elles au moyen des dispositifs de positionnement des véhicules (10c) chacun formés pour modifier les positions par rapport au châssis (11),
déplacer horizontalement les semi-remorques (12c) des autres véhicules (10c) pour coupler de manière affleurante les côtés longitudinaux (14) des semi-remorques (12c) des autres véhicules (10c) en modifiant la position horizontale des semi-remorques (12c) au moyen des dispositifs de positionnement des autres véhicules (10c),
relier les semi-remorques (12c) des autres véhicules (10c) aux semi-remorques (12a, 12b) reliées entre-elles, et ce au moyen du dispositif de liaison,
détacher les semi-remorques (12c) des autres véhicules (10c) des châssis (11) respectifs et sortir les châssis (11) respectifs en dessous des semi-remorques (12c),
appuyer les semi-remorques (12c) des autres véhicules (10c) au moyen des dispositifs de levage respectifs sur le sol (15).

12. Procédé selon l'une quelconque des revendications 9 à 11, **caractérisé en ce que**
l'abaissement des semi-remorques (12) reliées entre-elles s'effectue au moyen des dispositifs de levage.
